# FASCICULE DE BREVET EUROPEEN

(11) **EP 2 887 769 B1**
(45) Date de publication et mention de la délivrance du brevet: **05.02.2020**
(21) Numéro de dépôt: 14198369.2
(22) Date de dépôt: 16.12.2014
(51) Int. Cl.: H05B 33/08, H05B 37/02

(54) **Système d'éclairage à diodes électroluminescentes et luminaire distant**
Beleuchtungssystem mit Leuchtdioden, und Leuchte für die Fernbeleuchtung
Lighting system with LEDs and remote luminaire

(30) Priorité: 17.12.2013 FR 1362780
(43) Date de publication de la demande: 24.06.2015
(73) Titulaire: Securlite, 92130 Issy les Moulineaux (FR)
(72) Inventeur: Baussan, Ghislain, 72560 Change (FR)
(74) Mandataire: Cabinet Netter

(56) Documents cités:
- WO-A1-2012/075188
- US-A1- 2013 193 873
- US-B1- 8 011 794

## Description

L'invention concerne les systèmes d'éclairage, et en particulier ceux comprenant des luminaires commandés à distance.

Dans le domaine du bâtiment, la gestion de l'allumage et de l'extinction d'un ensemble de sources lumineuses dépend du nombre de sources lumineuses et du nombre d'organes de commande. Du montage à interrupteur unique, au montage à télérupteur en passant par les installations de type "va-et-vient", l'ensemble des sources lumineuses devant être activées/désactivées simultanément sont connectées à des fils électriques communs. Il en résulte que l'intensité électrique traversant ces fils correspond à la puissance consommée cumulée de l'ensemble des sources lumineuses. Il convient alors d'utiliser un organe de commande de type interrupteur supportant une telle puissance. Le demande de brevet US 8011794 au nom de American Megatrends Inc., déposée le 13 février 2007 et la demande de brevet US 2013/0193873 au nom de NULEDS, INC., déposée le 22 janvier 2013 décrivent les systèmes des éclairages à diodes électroluminescente. La demande de brevet EP 2 542 029 au nom de Toshiba Lighting & Technology Corporation, déposée le 21 mars 2012 et la demande de brevet EP 2 536 253 au nom de Samsung Electronics Co., Ltd. déposée le 13 février 2011, décrivent des éclairages à diode électroluminescente aussi. L'utilisation de sources de lumières à faible consommation, telles les diodes électroluminescentes, a également été promue par la Demanderesse depuis plus de cinq ans.

La Demanderesse a en outre identifié le besoin d'un système d'éclairage présentant un faible coût d'installation, et pour lequel trois câbles suffisent pour alimenter et commander un nombre important de sources de lumière et pour permettre à un organe de commande de piloter l'allumage de sources de lumière dont l'une au moins est distante.

L'invention vient améliorer la situation.

La Demanderesse propose un système d'éclairage à diodes électroluminescentes comprenant un détecteur de présence apte à commander l'éclairement et au moins deux luminaires commandés par le détecteur de présence. Au moins un des luminaires est distant du détecteur de présence, alimenté par deux fils d'alimentation de puissance et commandé par un fil de commande relié au détecteur de présence. Le luminaire distant comprend :
- une source de lumière à diode électroluminescente,
- un circuit de contrôle alimenté par deux fils d'alimentation de puissance et relié au fil de commande, présentant deux sorties d'alimentation de puissance, et
- un circuit d'alimentation alimenté par les deux sorties d'alimentation de puissance et apte à alimenter la source de lumière.

Le circuit de contrôle est apte à commander le circuit d'alimentation en réponse à la détection d'une tension prédéfinie entre l'un des deux fils d'alimentation de puissance et le fil de commande, de façon à permettre au circuit d'alimentation d'interrompe la fourniture d'énergie à la source de lumière.

Un tel système combine détecteur de présence et source de lumière à diodes électroluminescentes reliés par un réseau électrique et autorisant un grand nombre de sources de lumières. Il en découle des avantages écologiques, hygiéniques, de sécurité, d'efficacité énergétique et de praticité. En outre, le coût de chaque luminaire est faible, deux fils suffisent à assurer l'alimentation en puissance des luminaires et la consommation d'énergie est réduite.

Les trois fils électriques peuvent consister en trois fils préexistants d'une installation à rénover ou transformer. Parmi ces trois fils, il est suffisant que seulement deux fils soient capables de supporter un courant d'alimentation. Les coûts pour connecter des luminaires à un réseau électrique existant sont bien inférieurs aux coûts pour installer un nouveau réseau de fils et des luminaires. Le système est compatible avec une rénovation à bas coût se basant sur une installation existante.

Le système peut en outre présenter les caractéristiques suivantes, combinées entre elles ou non :
- Le circuit de contrôle est alimenté en courant alternatif. Ainsi, le luminaire peut être branché au secteur sans qu'il soit nécessaire d'intercaler un appareil supplémentaire transformant le courant alternatif en courant continu.
- Le circuit de contrôle comprend un contrôleur et un redresseur. Le redresseur est alimenté par les deux fils d'alimentation de puissance. Le contrôleur est alimenté par l'intermédiaire du redresseur. La présence d'une source propre d'énergie dédiée, telle une batterie, est optionnelle pour le fonctionnement du circuit de contrôle.
- Le luminaire est dépourvu d'interrupteur de puissance. La fiabilité est améliorée. Le coût des composants électroniques est réduit.
- Le circuit de contrôle est apte à commander le circuit d'alimentation en réponse à la détection d'un équipotentiel entre l'un des deux fils d'alimentation de puissance et le fil de commande. Le circuit de contrôle est ainsi commandé par l'intermédiaire du fil de commande. Un fil supplémentaire est superflu.
- Le détecteur de présence et un des luminaires sont installés dans un ensemble commun. L'installation du détecteur de présence et de la source de lumière est réalisée en une opération au lieu de deux. Les coûts de montage et de remplacement sont faibles.
- La puissance consommée du circuit d'alimentation et du circuit de contrôle cumulée fournie par les fils d'alimentation de puissance est inférieure à 500 milliwatts. La consommation totale du système est faible dans un état en veille, c'est-à-dire lorsqu'aucune présence n'est détectée et que les sources de lumière sont éteintes.
- Au moins un luminaire comprend un organe d'extinction progressive apte à diminuer progressivement le flux lumineux fourni par une source de lumière. La diminution progressive de l'intensité lumineuse fait office d'indicateur visuel de la prochaine extinction des lumières pour l'usager tout en lui assurant un éclairage suffisant pour anticiper la prochaine obscurité.
- Le détecteur de présence comprend un relais électromécanique muni d'une sortie reliée au fil de commande pour commander ledit luminaire distant du détecteur de présence. Le luminaire pourvu du relais électromécanique peut alors faire office d'organe de commande pour commander les luminaires distants.
- Le détecteur de présence comprend un interrupteur électronique muni d'une sortie reliée au fil de commande pour commander ledit luminaire distant du détecteur de présence. La fiabilité du système est améliorée. Le fonctionnement est silencieux.

Selon un autre aspect, la Demanderesse propose un kit d'installation d'un système d'éclairage. Le kit comprend :
- un premier luminaire,
- un détecteur de présence apte à être relié au premier luminaire, et
- au moins un second luminaire incluant
   - une source de lumière à diode électroluminescente,
   - un circuit de contrôle agencé pour être alimenté par deux fils d'alimentation de puissance et relié à un fil de commande, et présentant deux sorties d'alimentation de puissance, et
   - un circuit d'alimentation agencé pour être alimenté par les deux sorties d'alimentation de puissance du circuit de contrôle et pour alimenter la source de lumière. Le circuit de contrôle est apte à commander le circuit d'alimentation en réponse à la détection d'une tension prédéfinie entre l'un des deux fils d'alimentation de puissance et le fil de commande, de façon à permettre au circuit d'alimentation d'interrompe la fourniture d'énergie à la source de lumière.

Un tel kit d'installation peut au choix être utilisé pour installer un nouveau système d'éclairage ou pour rénover un système d'éclairage existant en réutilisant le câblage existant.

D'autres caractéristiques, détails et avantages de l'invention apparaîtront à la lecture de la description détaillée ci-après, et des dessins annexés, sur lesquels :
- La figure 1 est une représentation schématique d'une partie d'un système d'éclairage selon l'invention,
- la figure 2 est un schéma électrique d'un luminaire selon l'invention, et
- la figure 3 est un schéma électrique d'un autre luminaire selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant. Pour faciliter la compréhension, les liaisons électriques sont représentées en trait plein et les liaisons fonctionnelles sont représentées en trait tireté et fléché.

Les appareils manipulés par les utilisateurs sont soumis à des usures et dégradations importantes, en particulier dans les lieux recevant beaucoup de public tel les cages d'escaliers, couloirs, halls, etc.

Dans la plupart de ces lieux, les interrupteurs manuels sont des sources de contamination bactérienne. Par ailleurs, lorsqu'une personne cherche un interrupteur, le risque d'accident dans l'obscurité est important.

Les systèmes d'éclairage dont l'extinction nécessite l'action volontaire des utilisateurs conduisent à des consommations électriques importantes.

Les installations électriques existantes ne sont pas satisfaisantes.

Par ailleurs, la Demanderesse a identifié de nombreux obstacles sur les chantiers de rénovation. Bon nombre de réseaux électriques existants comprennent deux ou trois fils. Dans un contexte de rénovation, l'augmentation du nombre des sources lumineuses peut être souhaitable. Cependant, les installations électriques à rénover ne peuvent pas, en l'état, supporter une augmentation des puissances consommées. Le remplacement des organes de commande peut également être souhaitable. Les installations électriques à rénover ne peuvent pas, en l'état, accueillir des organes de commande nécessitant un réseau dédié. Un remplacement complet incluant notamment un recâblage des bâtiments n'est généralement pas souhaitable pour des raisons techniques et/ou économiques. Les coûts d'interventions en rénovation sont généralement supérieurs au coût des appareils électriques.

Les interrupteurs à contact présentent une fragilité qui tend à limiter les durées de vie des appareils électriques. L'invention vient lever ces difficultés.

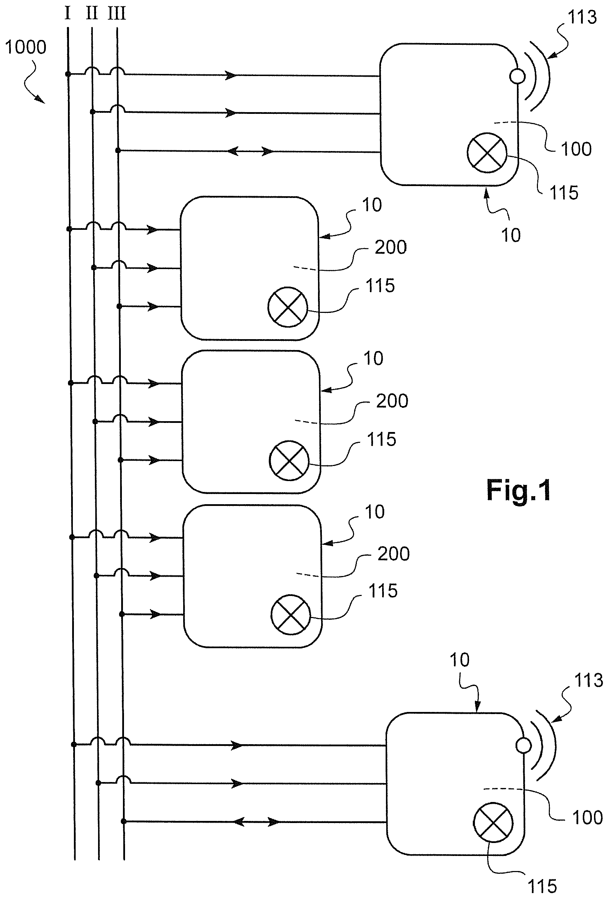

Le système d'éclairage 1000 représenté en figure 1 comprend trois fils électriques I, II et III. On désigne ici par fil tout conducteur électrique tel un fil unique, un faisceau de plusieurs fils en contact les uns avec les autres ou un câble. Les trois fils I, II et III sont chacun entouré d'une enveloppe isolante, par exemple en matière plastique. Chaque fil I, II et III forme une branche électrique d'un réseau électrique. Les trois fils I, II et III s'étendent selon un chemin commun, par exemple le long d'un couloir d'un bâtiment. Les trois fils électriques I, II, et III sont par exemple disposés ensemble dans une gaine commune.

Le système d'éclairage 1000 comprend une pluralité de luminaires d'un premier type 100 et une pluralité de luminaires d'un second type 200. Deux luminaires du premier type 100 et trois luminaires du second type 200 sont représentés sur la figure 1. Les luminaires du premier type 100 et les luminaires du second type 200 présentent chacun trois connecteurs branchés respectivement à chacun des trois fils I, II et III. Dans l'exemple décrit ici, les luminaires du premier type 100 sont chacun combinés avec un détecteur de présence 113 formant un module 10 commun. Les luminaires du second type 200 forment un module 10 dépourvu de détecteur de présence 113.

La répartition des luminaires du premier type 100 et des luminaires du second type 200 le long des fils I, II et III est adaptée à la configuration propre à chaque ensemble architectural dans lequel l'installation électrique est réalisée. En particulier, les luminaires du premier type 100 qui sont combinés à des détecteurs de présence 113 sont répartis de manière à couvrir l'ensemble des zones de détection souhaitables tandis que l'ensemble des luminaires 100, 200 qui sont pourvus d'une source de lumière sont répartis de manière à couvrir l'ensemble des zones à éclairer.

Dans un état prêt à fonctionner, le premier fil I et le second fil II sont mis sous tension en étant reliés chacun à une des bornes d'un réseau électrique, ou secteur. Le secteur, par exemple du type 230 Volts, n'est pas représenté ici. Le troisième fil III s'étend le long du premier fil I et du second fil II indépendamment du secteur et de la terre. Le premier fil I et le second fil II forment deux fils d'alimentation de puissance. Le troisième fil III forme un fil de commande.

En plus des trois fils électriques I, II et III, la gaine peut loger un fil de terre. Le fil de terre est similaire aux trois fils électriques I, II et III mais fait office de masse conductrice à la terre. Pour améliorer la lisibilité des figures, le fil de terre n'y est pas représenté.

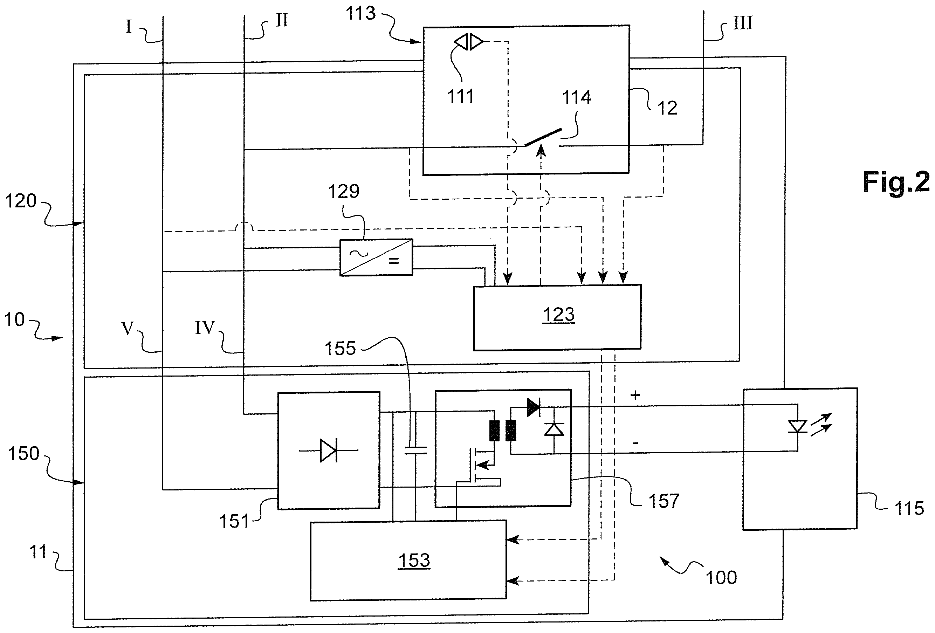

On fait maintenant référence à la figure 2 sur laquelle un schéma électrique d'un module 10 comprenant un luminaire du premier type 100 et un détecteur de présence 113 est représenté. Le luminaire du premier type 100 combiné au détecteur de présence 113 peut être appelé luminaire maître, luminaire actif ou encore luminaire de commande.

Le luminaire du premier type 100 comprend une source de lumière 115, un circuit de contrôle 120 et un circuit d'alimentation 150. Le détecteur de présence 113 comprend une cellule de détection 111 et un interrupteur commandé 114.

Dans l'exemple décrit ici, le module 10 du luminaire du premier type 100 et du détecteur de présence 113 comprend un boîtier 11. Le boîtier 11 supporte le détecteur de présence 113 et la source de lumière 115. Le boîtier 11 loge le circuit de contrôle 120 et le circuit d'alimentation 150. Le boîtier 11 forme un support commun pour le détecteur de présence 113 et le luminaire du premier type 100. En variante, le détecteur de présence 113 et le luminaire du premier type 100 peuvent former deux ensembles distincts et reliés électriquement. En variante, un luminaire du premier type 100 est dépourvu de source de lumière 115. Dans ce cas, le luminaire du premier type 100 assure une fonction de détection par combinaison avec le détecteur de présence 113 et non une fonction d'éclairage.

Le circuit de contrôle 120 et le circuit d'alimentation 150 prennent chacun ici la forme d'une carte électronique formée d'un circuit imprimé sur lequel sont implantés des composants électroniques. En variante, le circuit de contrôle 120 et le circuit d'alimentation 150 peuvent comprendre une carte électronique commune et/ou comprendre un ensemble de composants reliés par des fils électriques plutôt que par des pistes de circuits imprimés.

Le détecteur de présence 113 prend ici la forme d'une carte électronique modulaire 12 enfichée de manière amovible dans une prise correspondante du circuit de contrôle 120. La cellule de détection 111 comprend ici un capteur de mouvement de type haute-fréquence (HF), ici de l'ordre du gigahertz. Un tel capteur peut être logé dans le boîtier 11 sans qu'une fenêtre spécifique ou une ouverture ne soit prévue dans une paroi du boîtier 11. La détection reste efficace au travers des parois d'un boîtier 11, par exemple réalisé en polycarbonate. En variante, la cellule de détection 111 peut comprendre un capteur de présence de type infrarouge (IR), un capteur de mouvement de type inductif, capacitif, ou RADAR, ou encore tout autre capteur ou combinaison de capteurs adaptés au type de détection souhaitée.

Dans les exemples représentés, la cellule de détection 111 fait saillie du boîtier 11 tandis que l'interrupteur commandé 114 est logé à l'intérieur du boîtier 11. Une partie du détecteur de présence 113 fait saillie du boîtier 11. En variante, l'intégralité du détecteur de présence 113 est intégré dans le boîtier 11 ou l'intégralité du détecteur de présence 113 est déporté à l'extérieur du boîtier 11, par exemple fixé à sur une surface externe. Le boîtier 11 est, ici, semblable au boîtier antivandalisme décrit dans la demande de brevet FR 2 800 153 déposée par la Demanderesse le 22 octobre 1999 à laquelle le lecteur est invité à se reporter.

En fonctionnement, lorsque la cellule de détection 111 est activée par une présence, un signal est transmis à un contrôleur 123 du circuit de contrôle 120. Le contrôleur 123 comprend, ici, un processeur. Le contrôleur 123 interprète le signal transmis depuis la cellule de détection 111 et envoie un signal de commande vers l'interrupteur commandé 114 générant sa fermeture.

Dans l'exemple décrit ici, le contrôleur 123 fait office de contrôleur de détection: il reçoit des informations de la cellule de détection 111 et commande l'interrupteur commandé 114. En outre, le contrôleur 123 assure d'autres fonctions dans le circuit de contrôle 120 qui seront décrites dans la suite. En utilisant un seul contrôleur 123 pour assurer plusieurs fonctions, la consommation est réduite. En variante, le détecteur de présence 113 comprend un contrôleur de détection qui lui est propre, distinct du contrôleur 123. Dans ce cas, une alimentation du contrôleur de détection est prévue dans le détecteur de présence 113. La cellule de détection 111 est reliée en entrée du contrôleur de détection. L'interrupteur commandé 114 est relié en sortie du contrôleur de détection.

Une première borne de l'interrupteur commandé 114 est reliée au second fil II. Une seconde borne de l'interrupteur commandé 114 est reliée au troisième fil III. La fermeture de l'interrupteur commandé 114 met le troisième fil III au potentiel du second fil II. La seconde borne de l'interrupteur commandé 114 peut être vue comme une sortie du circuit de contrôle 120 reliée au troisième fil III. Le détecteur de présence 113 assure alors une fonction de commande. Le détecteur de présence 113 et l'interrupteur commandé 114 confèrent au luminaire du premier type 100 sa fonction d'appareil actif ou maître. Lorsque le troisième fil III est mis au potentiel du second fil II, le reste du système 1000 entre dans une phase d'allumage.

Le débranchement du détecteur de présence 113 par rapport au luminaire du premier type 100 permet d'obtenir un luminaire du second type 200 et *vice versa.* L'amovibilité du détecteur de présence 113 par rapport à un module 10 comprenant un luminaire du premier type 100 facilite la standardisation des modules 10 des luminaires du premier type 100 et des luminaires du second type 200. Cette propriété est optionnelle. Le détecteur de présence 113 et le circuit de contrôle 120 du luminaire du premier type 100 peuvent être reliés de manière définitive, voire être portés par une carte électronique commune.

La source de lumière 115 est supportée par le boîtier 11 du module 10 de manière qu'un flux lumineux soit dirigé vers l'extérieur du boîtier 11. La source de lumière 115 comprend au moins une diode électroluminescente.

Le circuit de contrôle 120 comprend le contrôleur 123 et un redresseur 129 de contrôle. Le circuit de contrôle 120 présente deux entrées formées par deux connecteurs reliés respectivement à chacun du premier fil électrique I et du second fil électrique II et une entrée/sortie formée par un connecteur relié au troisième fil électrique III. Le circuit de contrôle 120 présente en outre deux sorties IV et V formées par deux liaisons avec le circuit d'alimentation 150. Le connecteur du circuit de contrôle 120 relié au premier fil I est en liaison avec la seconde sortie V. En variante, la liaison entre le premier fil I et le circuit d'alimentation 150 est réalisée sans passer par le circuit de contrôle 120. La seconde sortie V est alors superflue. Le connecteur du circuit de contrôle 120 relié au second fil II est en liaison avec la première sortie IV. En variante, la liaison entre le second fil II et le circuit d'alimentation 150 est réalisée sans passer par le circuit de contrôle 120. La première sortie IV est alors superflue.

Le contrôleur 123 du circuit de contrôle 120 est agencé pour commander le circuit d'alimentation 150. Le contrôleur 123 est relié au premier fil I et au second fil II par l'intermédiaire du redresseur 129 du circuit de contrôle 120. Le redresseur 129, par exemple un pont de diodes, est agencé pour transformer le courant alternatif reçu du premier fil I et du second fil II en courant continu. Le contrôleur 123 est ainsi alimenté en puissance par le premier fil I et le second fil II. Quel que soit l'état de l'interrupteur commandé 114, le contrôleur 123 est alimenté. Le contrôleur 123 est en outre relié au second fil II et au troisième fil III, tel que représenté en flèches tiretées sur la figure 2. Le contrôleur 123 est apte à détecter si le premier fil I et le troisième fil III sont à équipotentiel, c'est-à-dire si tous les interrupteurs commandés 114 du système d'éclairage 1000 sont à l'état ouvert. Il suffit qu'un interrupteur commandé 114 du même module 10 ou d'un autre module 10 du système d'éclairage 1000 soit fermé pour mettre à équipotentiel le second fil électrique II et le troisième fil électrique III et faire apparaître une tension entre le premier fil I et le troisième fil III.

En fonctionnement, lorsqu'un détecteur de présence 113 est activé et que l'interrupteur commandé 114 correspondant se ferme (dans le module 10 de la figure 2 ou dans un autre module 10 sur le réseau), le contrôleur 123 détecte la mise à équipotentiel du second fil II et du troisième fil III. Le contrôleur 123 sort alors d'un mode "veille" ("*sleep mode"* ou *"suspend mode"* en anglais). Le mode veille correspond à un état du contrôleur 123 pendant lequel il reste alimenté mais présente une consommation d'énergie restreinte. Par exemple, le circuit de contrôle 120 en veille est inférieure à 250 milliwatts. À la sortie du mode veille, le contrôleur 123, alimenté par le premier fil I et le second fil II, transmet un signal d'allumage par l'intermédiaire des deux sorties de commande.

Le circuit d'alimentation 150 comprend un redresseur de puissance 151, par exemple un pont de diodes, un régulateur 153, une capacité 155 de filtrage et un organe à découpage 157. Les deux entrées du redresseur de puissance 151 forment aussi les deux entrées du circuit d'alimentation 150 et sont reliées respectivement à la première sortie IV et à la seconde sortie V du circuit de contrôle 120. Les deux sorties du redresseur de puissance 151 sont reliées aux deux entrées de l'organe à découpage 157.

La capacité 155 de filtrage est branchée entre les deux sorties du redresseur de puissance 151. La capacité 155 de filtrage est agencée de manière à lisser la tension en sortie du redresseur de puissance 151. En variante, le redresseur de puissance 151 peut être pourvu d'un correcteur de facteur de puissance, ou PFC pour *"Power Factor Corrector"* en anglais, pour diminuer la consommation de puissance réactive.

L'organe à découpage 157 est apte à transmettre la puissance reçue du redresseur de puissance 151 en adaptant la tension et/ou le courant. Le régulateur 153 commande l'organe à découpage 157. Le régulateur 153 est apte à commander un interrupteur de l'organe à découpage 157 pour adapter la tension et/ou le courant. Les sorties de l'organe à découpage 157 forment aussi des sorties du circuit d'alimentation 150. Les sorties du circuit d'alimentation 150 sont connectées respectivement à chacune des deux bornes de la source de lumière 115.

Le régulateur 153 est relié aux deux sorties de commande du contrôleur 123. Lorsque le contrôleur 123 transmet le signal d'allumage, il est reçu par le régulateur 153 du circuit d'alimentation 150. Le régulateur 153 pilote alors l'organe à découpage 157 en fonction des signaux de commande reçus du contrôleur 123 du circuit de contrôle 120. Au signal d'allumage, en sortie de veille, le régulateur 153 pilote le redresseur de puissance 151 afin qu'il convertisse le courant alternatif, reçu par le circuit d'alimentation 150 depuis le premier fil I et le second fil II par l'intermédiaire du circuit de contrôle 120, en un courant continu. L'organe à découpage 157, piloté par le régulateur 153, autorise l'alimentation en énergie de la source de lumière 115. Le courant continu alimente la source de lumière 115 par l'intermédiaire de l'organe à découpage 157.

Lorsque le détecteur de présence 113 cesse de détecter une présence, l'interrupteur commandé 114 s'ouvre. L'ouverture de l'interrupteur commandé 114 fait chuter la tension entre le premier fil I et le troisième fil III. Dans un système 1000 comprenant plusieurs luminaires du premier type 100, l'ouverture du dernier des interrupteurs commandés 114 engendre la chute de tension. Ainsi, une détection de présence suffit à maintenir la phase durant laquelle les sources de lumière 115 sont allumées.

De manière préférée, le contrôleur 123 comprend une minuterie agencée pour temporiser l'ouverture de l'interrupteur commandé 114. Après écoulement d'une durée prédéterminée de la minuterie, l'ouverture de l'interrupteur commandé 114 est provoquée.

En réponse à la détection de la chute de tension du troisième fil III, le contrôleur 123 envoi un signal d'extinction au régulateur 153. Pour détecter la chute de tension, le contrôleur 123 est agencé pour mesurer la tension entre le second fil II et le troisième fil III durant la phase où la source de lumière 115 est allumée. En variante, le contrôleur 123 est agencé pour mesurer la tension entre le premier fil I et le troisième fil III. Les liaisons entre le contrôleur 123 et chacun du second fil II et du troisième fil III représenté en flèches tiretées sur la figure 2, sont utilisées, ici, pour détecter la fermeture d'un interrupteur commandé 114 du système d'éclairage 1000 et pour détecter l'ouverture du dernier des interrupteurs commandés 114 du système d'éclairage 1000.

À réception du signal d'extinction, le régulateur 153 pilote l'organe à découpage 157 afin qu'il interrompe la fourniture d'énergie au circuit d'alimentation 150. Lorsque la source de lumière 115 n'est plus alimentée en énergie, elle s'éteint. Le contrôleur 123 par l'intermédiaire du redresseur 129, et le circuit d'alimentation 150, restent alimentés en énergie par le premier fil I et le second fil II. Le contrôleur 123 et le circuit d'alimentation 150 passent en mode veille. Le circuit de contrôle 120 et le circuit d'alimentation 150 présentent alors une consommation très faible, ici inférieure à 350 milliwatts pour le circuit de contrôle 120 et à 150 milliwatts pour le circuit d'alimentation 150, soit une consommation totale inférieure à 500 milliwatts. Le luminaire du premier type 100 est prêt pour une nouvelle séquence d'allumage.

Dans le mode de réalisation décrit ici, le circuit d'alimentation est pourvu d'une capacité 155 de filtrage. Dans ce cas, la source de lumière 115 cesse d'être alimentée en énergie seulement après déchargement de la capacité de filtrage 155. Le circuit d'alimentation 150 décrit ici est particulièrement adapté pour mettre en œuvre le mode de réalisation comprenant une fonction d'extinction progressive décrite dans la suite. Le circuit d'alimentation 150 peut présenter d'autres configurations, notamment en l'absence de l'option d'extinction progressive.

Dans le mode de réalisation de la figure 2, le redresseur 129 appartient au circuit de contrôle 120 et alimente le contrôleur 123. En variante, le redresseur 129 peut appartenir au circuit d'alimentation 150. Dans ce cas, le circuit d'alimentation 150 alimente non seulement la source de lumière 115 mais aussi le circuit de contrôle 120 et en particulier le contrôleur 123.

L'interrupteur commandée 114 du détecteur de présence 113 du module 10 représenté en figure 2 peut mettre à équipotentiel le second fil II et le troisième fil III du système 1000. L'apparition d'un potentiel dans le troisième fil III peut être détectée par les autres appareils électriques qui y sont reliés. C'est notamment le cas de chaque luminaire du premier type 100, dont celui du module 10 de la figure 2 combiné au détecteur de présence 113 à l'origine d'une détection. Les luminaires du second type 200 sont aussi en mesure de détecter l'apparition d'un potentiel dans le troisième fil III.

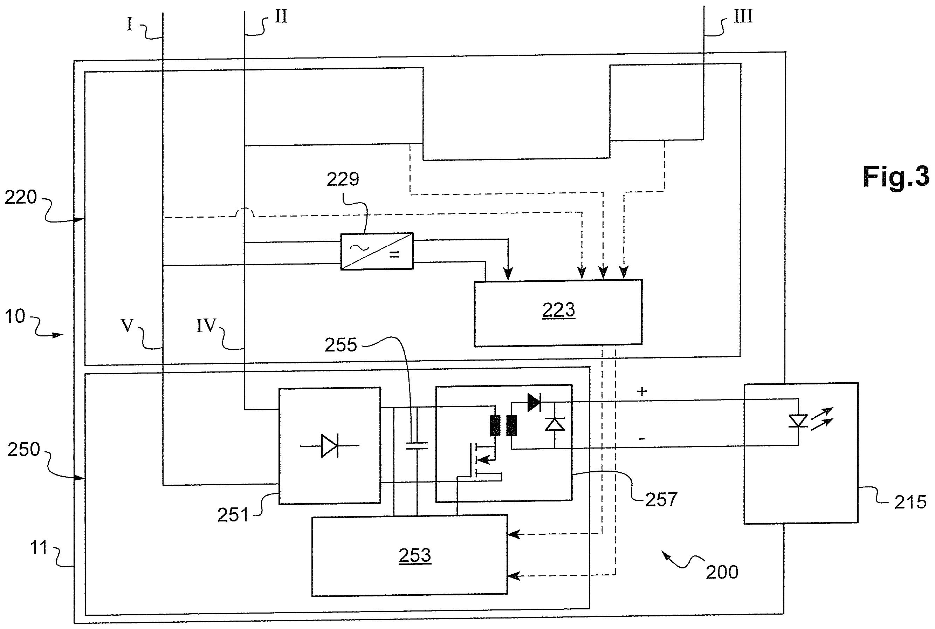

On fait maintenant référence à la figure 3 représentant un luminaire du second type 200. Dans l'exemple décrit ici, le luminaire du second type 200 est identique au luminaire du premier type 100 à ceci près que le détecteur de présence 113 connecté au luminaire du premier type 100 est absent dans le module 10 de la figure 3. D'un point de vue électrique, il peut être considéré que l'interrupteur commandé 114 disposé entre la seconde branche II et la troisième branche III du luminaire du premier type 100 de la figure 2 est remplacé par un circuit ouvert dans le luminaire du second type 200 de la figure 3. Comme décrit ci-avant, la déconnexion du détecteur de présence 113 depuis un luminaire du premier type 100 permet d'obtenir un luminaire du second type 200 et *vice versa.* Sur la figure 3, les composants similaires au luminaire du premier type 100 portent la même référence incrémentée de cent.

L'activation et le fonctionnement du luminaire du second type 200 dépendent du signal reçu par le troisième fil III ou fil de commande. Le module 10 comprenant le luminaire du second type 200 se distingue du module 10 comprenant le luminaire du premier type 100 par son incapacité à commander la mise sous tension ou hors tension du troisième fil III. Le luminaire du second type 200 est alors passif, ou esclave. Le luminaire du premier type 100 peut alternativement être actif lorsque le détecteur de présence 113 associé s'active et passif lorsque qu'un détecteur de présence 113 d'un autre luminaire du premier type 100 s'active et génère un signal de commande sur le troisième fil III.

Dans le luminaire du second type 200, lorsque le contrôleur 223 est sorti de veille par la mise sous tension du troisième fil III, il déclenche l'allumage de la source de lumière 215 par l'intermédiaire du régulateur 253 et de l'organe à découpage 257. Le fonctionnement de l'allumage puis de l'extinction de la source de lumière 215 est alors similaire à celui de la source de lumière 115 du luminaire du premier type 100.

Le système 1000 peut comprendre un unique ou une pluralité de luminaires du premier type 100. À l'état endormi, c'est-à-dire lorsqu'aucune présence n'a été détectée par l'un au moins des détecteurs de présence 113 du système 1000, chaque interrupteur commandé 114 est ouvert. Le second fil II est isolé du troisième fil III. Les sources de lumière 115 et 215 sont éteintes. La tension entre le premier fil I et le troisième fil III est sensiblement nulle. Les détecteurs de présence 113 restent alimentés par l'intermédiaire du premier fil I et du second fil II. La consommation du détecteur de présence 113 est, ici, inférieure à 500 milliwatts, incluant la consommation de la cellule de détection 111 et de la fonction de contrôle assurée par le contrôleur 123. Le contrôleur 223 du luminaire du second type 200, ne contrôlant pas de détecteur de présence, présente ici une consommation inférieure à 250 milliwatts.

Dans un système d'éclairage 1000 tel que représenté en figure 1, les sources de lumière 115 des luminaires du premier type 100 et les sources de lumière 215 des luminaires du second type 200 sont commandées par les détecteurs de présence 113 reliés aux luminaires du premier type 100. L'intensité du courant passant par l'au moins un interrupteur commandé 114 fermé est quasi-nulle durant les phases permanentes car le troisième fil III ne fait pas office de fil d'alimentation. À l'allumage, chaque circuit d'alimentation 150 de chaque luminaire du premier type 100 ou du deuxième type 200 alimente à son tour la source de lumière 115, 215 correspondante.

Le nombre de luminaires du premier type 100 ou du second type 200 pouvant être connectés sur le réseau électrique formé par les trois fils I, II et III est alors élevé. La puissance traversant les interrupteurs commandés 114 et le troisième fil III est nulle, au courant de fuite près. Il est alors peu important que le troisième fil III soit capable de supporter une puissance élevée. Par exemple, un fil en cuivre présentant un petit diamètre peut convenir pour cet usage. Les interrupteurs commandés 114 ne représentent pas le facteur limitant la puissance admissible dans un système d'éclairage 1000, et donc limitant le nombre de luminaires admissibles dans un système d'éclairage 1000. À titre de comparaison, les télérupteurs de l'état de la technique constituent généralement ce facteur limitant à cause de leur fragilité et de l'impossibilité de résister au passage de courants trop élevés. Ici, les luminaires du premier type 100 et du second type 200 sont dépourvus d'interrupteur de puissance.

Dans un contexte de rénovation et/ou d'extension d'un système d'éclairage existant, un système existant comprenant trois fils électriquement isolés les uns des autres peut servir de base pour former un système 1000 tel que décrit jusqu'ici. Il suffit alors de brancher les luminaires du premier type 100 et les luminaires du second type 200 aux fils existants.

Les trois fils I, II et III sont alors constitués des fils préexistants. Le nombre de sources de lumière peut être augmenté par rapport à l'existant sans ce que cela ne nécessite de remplacement du câblage préexistant. La conservation du nombre de branches électriques, ici au nombre de trois (ligne de terre non comprise), réduit les risques d'erreur de montage. Par ailleurs, même si un connecteur de puissance (II) d'un luminaire tel que décrit jusqu'ici était relié par erreur au troisième fil III, le troisième fil III ne subirait pas d'endommagement irréversible. À titre de comparaison, une erreur de branchement dans un système électrique comprenant à la fois des fils de puissance (calibrés pour du 230 V) et des fils de commande (calibrés pour du 1 à 10 V) peut entraîner des surcharges incompatibles avec la sécurité des matériels et des personnes.

On peut envisager des organes de commande générant des signaux sur des fils de commande indépendants des trois fils I, II et III. Un réseau de câbles dédiés doit être disponible pour relier l'ensemble de ces organes de commande. Un tel réseau n'est généralement pas disponible. En installer présente un coût supplémentaire et augmente les risques identifiés au paragraphe précédent.

Dans l'exemple décrit ici, les luminaires du premier type 100 comprennent une source de lumière 115. En variante, la source de lumière 115 peut être absente. Un tel luminaire fait fonction d'organe de commande du système d'éclairage 1000 sans fournir de lumière. Les circuits de contrôle 120, 220, les circuits d'alimentation 150, 250 et les sources de lumière 115, 215 peuvent prendre la forme d'ensembles modulaires amovibles du luminaire du premier type 100, respectivement du luminaire du second type 200. En cas de dysfonctionnement d'un des ensembles modulaires amovibles, un remplacement de l'ensemble modulaire incriminé est possible sans qu'il soit nécessaire de remplacer tout le luminaire.

Dans des variantes, le contrôleur 123, 223 est en outre agencé pour transmettre au régulateur 153, 253 un signal d'extinction progressive.

En fonctionnement, lorsque le dernier interrupteur commandé 114 du système 1000 vient à s'ouvrir, le troisième fil III voit son potentiel revenir sensiblement à une valeur nulle. Le contrôleur 123, 223 détecte ce changement et envoie le signal d'extinction progressive au régulateur 153, 253.

À réception du signal d'extinction progressive, le régulateur 153, 253 pilote une diminution progressive de la puissance en sortie de l'organe à découpage 157, 257, provoquant l'extinction progressive de la source de lumière 115, 215. Le régulateur 153, 253 forme alors un organe d'extinction progressive apte à diminuer progressivement le flux lumineux fourni par la source de lumière 315.

Dans une autre variante, le contrôleur 123, 223 envoie un signal d'extinction et le régulateur 153, 253 réagit en pilotant une extinction progressive de la source de lumière 115, 215 par l'intermédiaire de l'organe à découpage 157, 257. Dans ce cas, c'est le régulateur 153, 253 qui est doté d'une fonction d'extinction progressive.

Les caractéristiques optionnelles d'extinction progressive peuvent être transposées aux luminaires du premier type 100 et/ou aux premiers luminaires du second type 200.

Dans un système d'éclairage 1000, certains seulement des luminaires peuvent être dotés de la fonction d'extinction progressive. Dans ce cas, les luminaires qui sont dépourvus de cette fonction s'éteignent brutalement tandis que les autres s'éteignent progressivement.

L'invention propose aussi un kit d'installation comprenant au moins un luminaire du premier type, ou luminaire maître, et un luminaire du second type, ou luminaire esclave. La composition dudit kit peut inclure un ou plusieurs luminaires de chacun des deux types. Le kit peut comprendre des ensembles modulaires de détecteurs de présence supplémentaires et/ou des ensembles modulaires de sources de lumière supplémentaires. Les ensembles modulaires supplémentaires sont prévus pour être ajoutés aux luminaires du second type. Cela permet de transformer et d'adapter au besoin les luminaires des deux types. La composition du kit peut être adaptée à la carte en fonction du système d'éclairage 1000 souhaité.

L'invention ne se limite pas aux exemples de systèmes et de kits décrits ci-avant, seulement à titre d'exemples, mais elle englobe toutes les variantes que pourra envisager l'homme de l'art dans le cadre des revendications ci-après.

## Revendications

1. Système (1000) d'éclairage à diodes électroluminescentes, **caractérisé par le fait qu'**il comprend un détecteur de présence (113) apte à commander l'éclairement et au moins deux luminaires (100, 200) commandés par le détecteur de présence (113), au moins un des luminaires (200) étant distant du détecteur de présence (113), alimenté par deux fils d'alimentation de puissance (I, II) et commandé par un fil de commande (III) relié au détecteur de présence (113),
ledit luminaire (200) comprenant :
- une source de lumière (215) à diode électroluminescente,
- un circuit de contrôle (220) alimenté par deux fils d'alimentation de puissance (I, II) et relié au fil de commande (III), présentant deux sorties (IV, V) d'alimentation de puissance,
- un circuit d'alimentation (250) alimenté par les deux sorties (IV, V) d'alimentation de puissance et apte à alimenter la source de lumière (215),
**caractérisé par** le circuit de contrôle (220) étant apte à commander le circuit d'alimentation (250) en réponse à la détection d'une tension prédéfinie entre l'un des deux fils d'alimentation de puissance (II) et le fil de commande (III), de façon à permettre au circuit d'alimentation (250) d'interrompre la fourniture d'énergie à la source de lumière (215).

2. Système selon la revendication 1, dans lequel le circuit de contrôle (220) est alimenté en courant alternatif.

3. Système selon l'une des revendications 1 et 2, dans lequel le circuit de contrôle (220) comprend un contrôleur (223) et un redresseur (229), le redresseur (129) étant alimenté par les deux fils d'alimentation de puissance (I, II), le contrôleur (223) étant alimenté par l'intermédiaire du redresseur (129).

4. Système selon l'une des revendications précédentes, dans lequel ledit luminaire (200) est dépourvu d'interrupteur de puissance.

5. Système selon l'une des revendications précédentes, dans lequel le circuit de contrôle (220) est apte à commander le circuit d'alimentation (250) en réponse à la détection d'un équipotentiel entre l'un des deux fils d'alimentation de puissance (II) et le fil de commande (III).

6. Système selon l'une des revendications précédentes, dans lequel le détecteur de présence (113) et un des luminaires (100) sont installés dans un ensemble (11) commun.

7. Système selon l'une des revendications précédentes, dans lequel la puissance consommée du circuit d'alimentation (250) et du circuit de contrôle (220) cumulée fournie par les fils d'alimentation de puissance (I, II) est inférieure à 500 milliwatts.

8. Système selon l'une des revendications précédentes, dans lequel au moins un luminaire comprend un organe d'extinction progressive apte à diminuer progressivement le flux lumineux fourni par une source de lumière.

9. Système selon l'une des revendications précédentes, dans lequel le détecteur de présence (113) comprend un relais électromécanique (114) muni d'une sortie reliée au fil de commande (III) pour commander ledit luminaire (200) distant du détecteur de présence (113).

10. Système selon l'une des revendications 1 à 8, dans le détecteur de présence (113) comprend un interrupteur électronique (114) muni d'une sortie reliée au fil de commande (III) pour commander ledit luminaire (200) distant du détecteur de présence (113).

11. Kit d'installation d'un système (1000) selon l'une des revendications précédentes comprenant :
- un premier luminaire (100),
- un détecteur de présence (113) apte à être relié au premier luminaire (100), et
- au moins un second luminaire (200) incluant
- une source de lumière (215) à diode électroluminescente,
- un circuit de contrôle (220) agencé pour être alimenté par deux fils d'alimentation de puissance (I, II) et relié à un fil de commande (III), et présentant deux sorties (IV, V) d'alimentation de puissance, et
- un circuit d'alimentation (250) agencé pour être alimenté par les deux sorties (IV, V) d'alimentation de puissance du circuit de contrôle (220) et pour alimenter la source de lumière (215),
**caractérisé par** le circuit de contrôle (220) étant apte à commander le circuit d'alimentation (250) en réponse à la détection d'une tension prédéfinie entre l'un des deux fils d'alimentation de puissance (II) et le fil de commande (III), de façon à permettre au circuit d'alimentation (250) d'interrompre la fourniture d'énergie à la source de lumière (215).

## Patentansprüche

1. Leuchtdioden-Beleuchtungssystem (1000), **dadurch gekennzeichnet, dass** es einen Anwesenheitsdetektor (113), der in der Lage ist, die Beleuchtung zu steuern, und mindestens zwei durch den Anwesenheitsdetektor (113) gesteuerte Beleuchtungskörper (100, 200) umfasst,
wobei mindestens einer der Beleuchtungskörper (200) von dem Anwesenheitsdetektor (113) entfernt ist, durch zwei Stromversorgungsdrähte (I, II) versorgt und durch einen mit dem Anwesenheitsdetektor (113) verbundenen Steuerungsdraht (III) gesteuert wird,
wobei der Beleuchtungskörper (200) Folgendes umfasst:
- eine Leuchtdioden-Lichtquelle (215),
- eine durch die zwei Stromversorgungsdrähte (I, II) versorgte und mit dem Steuerungsdraht (III) verbundene Kontrollschaltung (220), die zwei Stromversorgungsausgänge (IV, V) aufweist,
- eine Versorgungsschaltung (250), versorgt durch die zwei Stromversorgungsausgänge (IV, V) und in der Lage, die Lichtquelle (215) zu versorgen,
**dadurch gekennzeichnet, dass** die Kontrollschaltung (220) in der Lage ist, die Versorgungsschaltung (250) als Reaktion auf die Detektion einer zwischen dem einen der zwei Stromversorgungsdrähte (II) und dem Steuerungsdraht (III) vordefinierten Spannung auf eine Weise zu steuern, um der Versorgungsschaltung (250) zu erlauben, das Bereitstellen von Energie an die Lichtquelle (215) zu unterbrechen.

2. System nach Anspruch 1, wobei die Kontrollschaltung (220) mit Wechselstrom versorgt wird.

3. System nach einem der Ansprüche 1 und 2, wobei die Kontrollschaltung (220) ein Kontrollgerät (223) und einen Gleichrichter (229) umfasst, wobei der Gleichrichter (129) durch die zwei Stromversorgungsdrähte (I, II) versorgt wird, wobei das Kontrollgerät (223) durch Zwischenschaltung des Gleichrichters (129) versorgt wird.

4. System nach einem der vorstehenden Ansprüche, wobei dem Beleuchtungskörper (200) ein Leistungsschalter fehlt.

5. System nach einem der vorstehenden Ansprüche, wobei die Kontrollschaltung (220) in der Lage ist, die Versorgungsschaltung (250) als Reaktion auf die Detektion eines Äquipotentials zwischen dem einen der zwei Stromversorgungsdrähte (II) und dem Steuerungsdraht (III) zu steuern.

6. System nach einem der vorstehenden Ansprüche, wobei der Anwesenheitsdetektor (113) und einer der Beleuchtungskörper (100) in einer gemeinsamen Anordnung (11) installiert sind.

7. System nach einem der vorstehenden Ansprüche, wobei die durch die Stromversorgungsdrähte (I, II) bereitgestellte, von der Versorgungsschaltung (250) und der kumulativen Kontrollschaltung (220) konsumierte Leistung weniger als 500 Milliwatt beträgt.

8. System nach einem der vorstehenden Ansprüche, wobei mindestens ein Beleuchtungskörper ein progressives Löschorgan umfasst, das in der Lage ist, den durch die Lichtquelle bereitgestellten Lichtstrom stufenweise zu verringern.

9. System nach einem der vorstehenden Ansprüche, wobei der Anwesenheitsdetektor (113) ein elektromechanisches Relais (114) umfasst, das mit einem Ausgang versehen ist, der mit dem Steuerungsdraht (III) verbunden ist, um den vom Anwesenheitsdetektor (113) entfernten Beleuchtungskörper (200) zu steuern.

10. System nach einem der Ansprüche 1 bis 8, wobei der Anwesenheitsdetektor (113) einen elektronischen Schalter (114) umfasst, der mit einem, mit dem Steuerungsdraht (III) verbundenen, Ausgang versehen ist, um den vom Anwesenheitsdetektor (113) entfernten Beleuchtungskörper (200) zu steuern.

11. Installationskit eines Systems (1000) nach einem der vorstehenden Ansprüche, umfassend:
- einen ersten Beleuchtungskörper (100),
- einen Anwesenheitsdetektor (113), der in der Lage ist, mit dem ersten Beleuchtungskörper (100) verbunden zu werden, und
- mindestens einen zweiten Beleuchtungskörper (200), einschließend
- eine Leuchtdioden-Lichtquelle (215),
- eine Kontrollschaltung (220), angeordnet, um durch zwei Stromversorgungsdrähte (I, II) versorgt zu werden und welche mit einem Steuerungsdraht (III) verbunden ist und zwei Stromversorgungsausgänge (IV, V) aufweist, und
- eine Versorgungsschaltung (250), angeordnet, um durch die zwei Stromversorgungsausgänge (IV, V) der Kontrollschaltung (220) versorgt zu werden und um die Lichtquelle (215) zu versorgen,
**dadurch gekennzeichnet, dass** die Kontrollschaltung (220) in der Lage ist, die Versorgungsschaltung (250) als Reaktion auf eine Detektion einer zwischen dem einen der zwei Stromversorgungsdrähte (II) und dem Steuerungsdraht (III) vordefinierten Spannung auf eine Weise zu steuern, um der Versorgungsschaltung (250) zu erlauben, das Bereitstellen von Energie an die Lichtquelle (215) zu unterbrechen.

## Claims

1. Lighting system (1000) with light-emitting diodes, **characterised in that** it comprises a proximity sensor (113) capable of controlling the lighting and at least two luminaires (100, 200) controlled by the proximity sensor (113),
at least one of the luminaires (200) being remote from the proximity sensor (113), powered by two power supply wires (I, II) and controlled by a control wire (III) connected to the proximity sensor (113),
said luminaire (200) comprising:
- a light source (215) with light emitting diodes,
- a control circuit (220) powered by two power supply wires (I, II) and connected to the control wire (III), having two power supply outputs (IV, V),
- a power supply circuit (250) powered by the two power supply outputs (IV, V) and capable of powering the light source (215),
**characterised in that**
the control circuit (220) is capable of controlling the power supply circuit (250) in response to the detection of a predefined voltage between one of the two power supply wires (II) and the control wire (III), so as to allow the power supply circuit (250) to stop the supply of power to the light source (215).

2. System according to claim 1, wherein the control circuit (220) is powered by alternating current.

3. System according to one of claims 1 and 2, wherein the control circuit (220) comprises a controller (223) and a rectifier (229), the rectifier (129) being powered by the two power supply wires (I, II), the controller (223) being powered via the rectifier (129).

4. System according to one of the preceding claims, wherein said luminaire (200) is devoid of a power switch.

5. System according to one of the preceding claims, wherein the control circuit (220) is capable of controlling the power supply circuit (250) in response to the detection of an equipotential between one of the two power supply wires (II) and the control wire (III).

6. System according to one of the preceding claims, wherein the proximity sensor (113) and one of the luminaires (100) are installed in a joint assembly (11).

7. System according to one of the preceding claims, wherein the cumulated power consumption of the power supply circuit (250) and the control circuit (220) supplied by the power supply wires (I, II) is less than 500 milliwatts.

8. System according to one of the preceding claims, wherein at least one luminaire comprises a gradual extinction member capable of gradually dimming the light flux supplied by a light source.

9. System according to one of the preceding claims, wherein the proximity sensor (113) comprises an electromechanical relay (114) provided with an output connected to the control wire (III) so as to control said luminaire (200) that is remote from the proximity sensor (113).

10. System according to one of claims 1 to 8, wherein the proximity sensor (113) comprises an electronic switch (114) provided with an output connected to the control wire (III) so as to control said luminaire (200) that is remote from the proximity sensor (113).

11. Kit for installing a system (1000) according to one of the preceding claims, comprising:
- a first luminaire (100),
- a proximity sensor (113) capable of being connected to the first luminaire (100), and
- at least one second luminaire (200) including
-- a light source (215) with light emitting diodes,
-- a control circuit (220) arranged such that it is powered by two power supply wires (I, II) and connected to a control wire (III), and having two power supply outputs (IV, V), and
-- a power supply circuit (250) arranged such that it is powered by the two power supply outputs (IV, V) of the control circuit (220) and such that it powers the light source (215),
**characterised in that**
the control circuit (220) is capable of controlling the power supply circuit (250) in response to the detection of a predefined voltage between one of the two power supply wires (II) and the control wire (III), so as to allow the power supply circuit (250) to stop the supply of power to the light source (215).
